**Europäisches Patentamt**

**European Patent Office**

**Office européen des brevets**

(19)

(11) Veröffentlichungsnummer: **0 363 357 B1**

(12) # EUROPÄISCHE PATENTSCHRIFT

(45) Veröffentlichungstag der Patentschrift:
03.07.91 Patentblatt 91/27

(51) Int. Cl.⁵: **B62D 5/04, G01L 3/14**

(21) Anmeldenummer: 88901260.5

(22) Anmeldetag: 29.01.88

(86) Internationale Anmeldenummer:
PCT/EP88/00063

(87) Internationale Veröffentlichungsnummer:
WO 88/05742 11.08.88 Gazette 88/18

(54) DREHMOMENTSENSOR, INSBESONDERE FÜR ELEKTRISCHE LENKUNGEN.

(30) Priorität: 03.02.87 DE 3703102

(43) Veröffentlichungstag der Anmeldung:
18.04.90 Patentblatt 90/16

(45) Bekanntmachung des Hinweises auf die
Patenterteilung:
03.07.91 Patentblatt 91/27

(84) Benannte Vertragsstaaten:
DE FR GB IT SE

(56) Entgegenhaltungen:
FR-A- 2 558 253
US-A- 2 260 036
US-A- 2 737 049
Machine Design, vol. 38, no. 9, April 14, 1966,
(Cleveland, US), "Twisting sleeve senses torque", page 159 (see whole document)

(73) Patentinhaber: ZAHNRADFABRIK
FRIEDRICHSHAFEN AKTIENGESELLSCHAFT
Löwentaler Strasse 100 Postfach 2520
W-7990 Friedrichshafen 1 (DE)

(72) Erfinder: LANG, Armin
Rheinstra e 10
W-7070 Schwäbisch Gmünd (DE)
Erfinder: SCHWEIZER, Bernhard
Gratwohlhof 2
W-7079 Böbingen/Rems (DE)

(74) Vertreter: Raue, Reimund
Zahnradfabrik Friedrichshafen AG Löwentaler
Strasse 100 Postfach 2520
W-7990 Friedrichshafen 1 (DE)

## Beschreibung

Die Erfindung betrifft einen Drehmomentsensor, insbesondere für elektrische Lenkungen, nach dem Oberbegriff des Anspruches 1.

Ein derartiger Drehmomentsensor ist bekannt aus der US-PS 45 48 091. Dieser induktiv arbeitende Drehmomentsensor weist zwei Eingangsglieder und ein ringförmiges Ausgangsglied auf, die über eine Reihe von Verbindungselementen und verstärkenden Armen mit gelenkigen Verbindungen miteinander verbunden sind. Durch die Anordnung einer Vielzahl von komplizierten Einzelteilen ergibt sich eine sehr aufwendige Konstruktion mit einem relativ großen Außendurchmesser. Der Aufbau eines redundanten Drehmomentsensors aus den bekannten Elementen ist nicht möglich, da sich durch eine Hintereinanderschaltung zweier derartiger Elemente die Verdrehsteife des Sensors halbieren würde.

Der Erfindung liegt die Aufgabe zugrunde, einen Drehmomentsensor der bekannten Art unter Vermeidung der ihm anhaftenden Nachteile derart zu verbessern, daß er nur einen kleinen Bauraum beansprucht und leicht herstellbar ist. Eine Redundanz soll ohne Minderung der Verdrehsteife erreichbar sein.

Diese Aufgabe wird durch den im Anspruch 1 gekennzeichneten Drehmomentsensor gelöst. Vorteilhafte und zweckmäßige Ausgestaltungen sind in den Unteransprüchen angegeben. Die Erfindung ist nicht auf die Merkmalskombinationen der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Durch die an beiden Seiten des Ausgangsgliedes in je einer gemeinsamen Fläche angeordneten Stege lassen sich die Einzelteile des Drehmomentsensors, insbesondere das Ausgangsglied mit seinen Verbindungselementen, einfach herstellen. Die Stege greifen direkt an den Eingangsgliedern und an dem Ausgangsglied an, so daß die radiale Abmessung des erfindungsgemäßen Drehmomentsensors gegenüber dem bekannten Drehmomentsensor klein ist. Die ineinander eingreifenden, stegartigen Fortsätze der Eingangsglieder, die miteinander eine Totgangmitnahme bilden, sichern den Drehmomentsensor gegen Überlastung.

Die einfache Hintereinanderschaltung zweier Ausgangsglieder mit entsprechender Festlegung ihrer Stege an den Eingangsgliedern ergibt auf einfache Weise eine vollständige Redundanz des Drehmomentsensors.

Bei Verwendung von zwei Ausgangsgliedern ergeben sich durch unterschiedliche Anordnung der Stege bezüglich ihrer Winkelstellung unterschiedliche Bewegungsrichtungen der beiden Ausgangsglieder. Die Bewegung der Ausgangsglieder kann dadurch gleichsinnig oder gegensinnig erfolgen, so daß sich, je nach Anwendungsfall, günstige Meßgrößen für die elektrische Auswertung der Drehmomentsignale ergeben.

Durch die Aufteilung des Ausgangsgliedes in zwei flache Ringe, von denen jeder die zu einem der Eingangsglieder gerichteten Stege trägt, sind die Einzelteile sehr leicht, beispielsweise durch Stanzen, herstellbar. Die Einzelteile können auf einfache Weise durch Laserstrahlschweißung miteinander verbunden werden.

Im folgenden wird die Erfindung anhand mehrerer in der Zeichnung dargestellter Ausführungsbeispiele näher erläutert. Es zeigt:

Fig. 1     eine Schrägansicht des Drehmomentsensors nach einem ersten Ausführungsbeispiel ;

Fig. 2     einen Längsschnitt durch den Drehmomentsensor nach Fig. 1 ;

Fig. 3     einen Längsschnitt wie in Fig. 2, jedoch nach einem zweiten Ausführungsbeispiel ;

Fig. 4     die Abwicklung einer Draufsicht auf das Ausgangsglied in drei unterschiedlichen Funktionsstellungen ;

Fig. 5     eine Schrägansicht auf die Eingangsglieder eines Drehmomentsensors nach einem dritten Ausführungsbeispiel ;

Fig. 6     einen Längsschnitt durch den gesamten Drehmomentsensor des dritten Ausführungsbeispieles ;

Fig. 7     den Querschnitt durch den Drehmomentsensor nach der Linie VII-VII in Fig. 6 ;

Fig. 8     die Abwicklung einer Draufsicht auf die beiden Ausgangsglieder des Drehmomentsensors nach Fig. 6 in drei unterschiedlichen Funktionsstellungen ;

Fig. 9     einen Längsschnitt durch den Drehmomentsensor nach einem vierten Ausführungsbeispiel ;

Fig. 10    den Querschnitt durch den Drehmomentsensor nach der Linie X-X in Fig. 9.

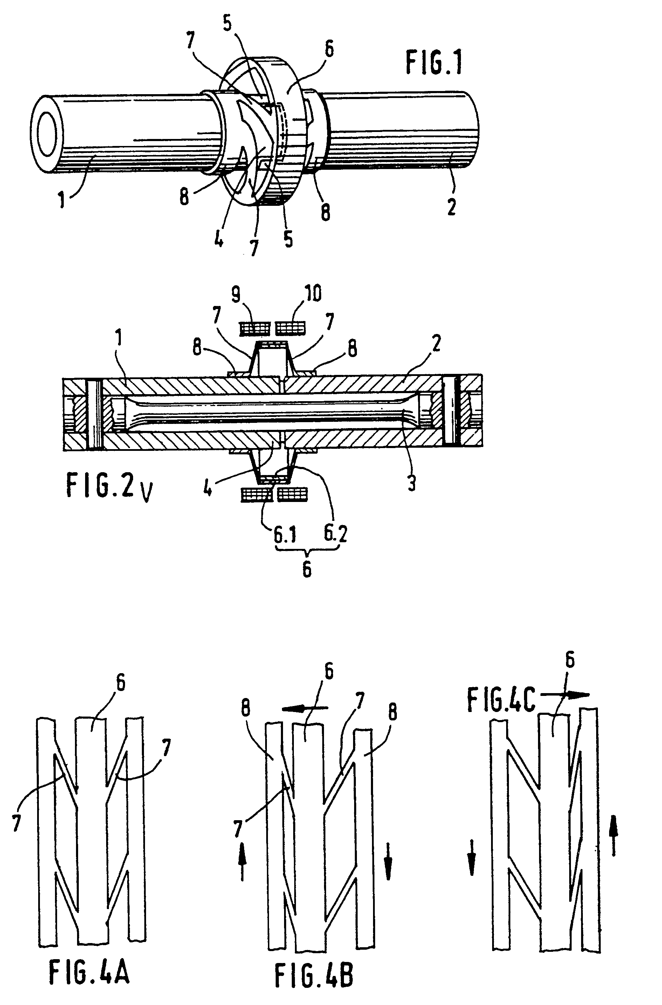

Der Drehmomentsensor des ersten Ausführungsbeispieles nach den Fig. 1 und 2 besitzt zwei koaxial zueinander angeordnete, im wesentlichen zylindrische Eingangsglieder 1 und 2, die durch einen Drehstab 3 miteinander verbunden sind. Die Eingangsglieder 1 und 2 besitzen an ihren einander zugewandten Enden stegartige Fortsätze 4 und 5, die ineinander eingreifen, eine bestimmte Verdrehung der Eingangsglieder 1 und 2 zueinander zulassen und zusammen eine Totgangmitnahme bilden.

Ein im wesentlichen ringförmiges Ausgangsglied 6 wird durch mehrere biegeelastische Stege 7 in einem radialen Abstand von den Eingangsgliedern 1 und 2 gehalten. Auf beiden in axiale Richtung weisenden Seiten des Ausgangsgliedes 6 ist je ein Satz der Stege 7 angeordnet und stellt somit auf beiden Seiten die Verbindung

2

zwischen dem Ausgangsglied 6 und den beiden Eingangsgliedern 1 bzw. 2 her. Jeder Satz von Stegen 7 ist in einer gemeinsamen Fläche angeordnet. Die Fläche ist dabei entweder eben und senkrecht zu der Längsachse des Drehmomentsensors oder schwach konisch ausgebildet, wobei der Konuswinkel zwischen etwa 150° und 178° liegt. Die Stege 7 erstrecken sich in Strahlen zwischen den Eingangsgliedern 1 bzw. 2 und dem Ausgangsglied 6. Die Strahlen sind dabei bogenförmig in Form eines Kreisbogens oder einer ähnlichen Kurve gekrümmt. Dabei schließen in unbelastetem Zustand die Stege 7 mit dem Ausgangsglied 6 jeweils gleiche Winkel ein.

Das Ausgangsglied 6 besteht zweckmäßigerweise aus zwei flachen, einander in radialer Richtung berührenden Ringen 6.1 und 6.2. Die beiden Ringe 6.1 und 6.2 sind fest miteinander zu dem Ausgangsglied 6 verbunden, beispielsweise durch ein Laserstrahl-Schweißverfahren.

Die jeweils einem der Eingangsglieder 1 bzw. 2 zugeordneten Stege 7 sind an ihrem dem jeweiligen Eingangsglied zugewandten Ende durch einen Ringbund 8 miteinander verbunden. Die Ringbunde 8 sind mit den Eingangsgliedern 1 bzw. 2 fest verbunden, beispielsweise durch Laserstrahl-Schweißung.

Durch die Art der Verbindung des Ausgangsgliedes 6 und der Stege 7 mit den Ringbunden 8 ist es möglich, dieses Teil aus einem gezogenen Topf mit teilweise durchgezogenem Boden auf einfache Art herzustellen. Die zylindrische Außenwand des Topfes bildet dabei den Ring 6.1 bzw. 6.2. Aus dem durchgezogenen Teil des Bodens entsteht der Ringbund 8. Die Stege 7 werden aus dem verbleibenden Rest des Bodens in der gewünschten Form ausgestanzt. Die Stege 7 bleiben dabei mit dem Ring 6.1 bzw. 6.2 und mit dem Ringbund 8 verbunden. Als Werkstoff hat sich eine BeCu-Legierung als zweckmäßig erwiesen.

Bei Verwendung von Kunststoff für das aus Ring 6.1 bzw. 6.2, Stegen 7 und Ringbund 8 bestehende Teil ist es zweckmäßig die beiden Ringe 6.1 und 6.2 mit gleichem Außendurchmesser auszuführen und durch einen die beiden Ringe 6.1 und 6.2 außen umfassenden Ring 6.3 aus Eisen zu verbinden. Dabei kann der Konuswinkel bis auf etwa 90° verkleinert werden.

Außer den genannten Werkstoffen ist es auch möglich, die Stege 7 aus Draht herzustellen und mit dem Ring 6.1 bzw. 6.2 und dem Ringbund 8 zu verbinden.

Dem Ausgangsglied 6 sind zwei Induktivspulen 9 und 10 oder ein aus drei Spulen bestehender Differentialtransformator 11 zugeordnet, die beispielsweise von einer Trägerfrequenzbrücke gespeist bzw. in geeigneten Gleichrichterschaltungen ausgewertet werden. (Fig. 3)

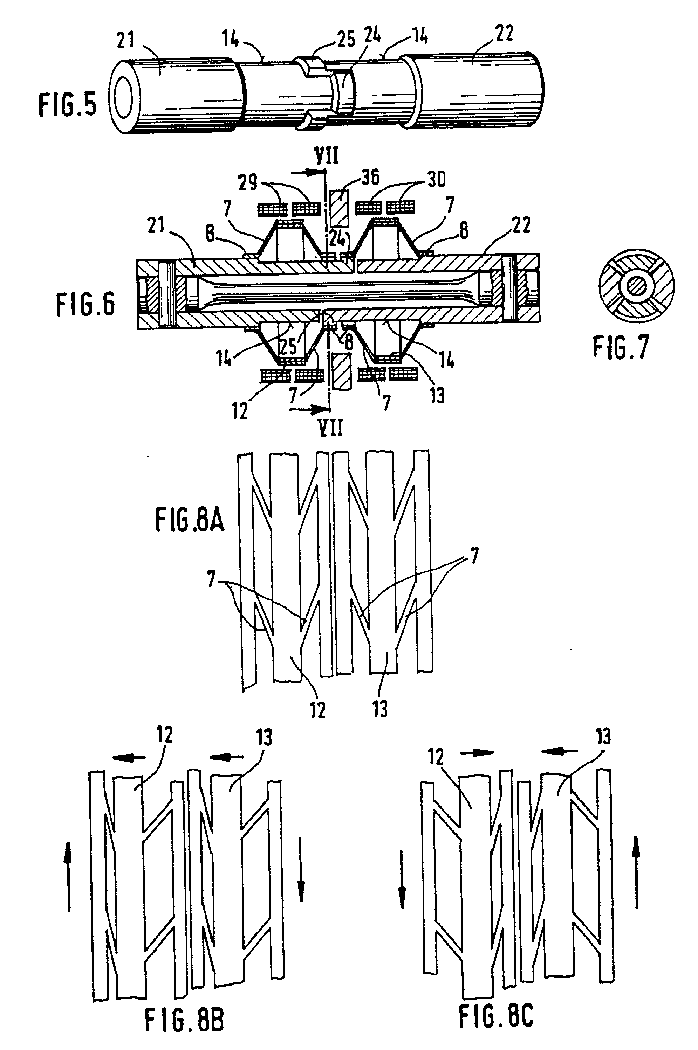

In dem Ausführungsbeispiel nach den Fig. 5 bis 8 sind zwei Ausgangsglieder 12 und 13 koaxial hintereinander angeordnet. Die beiden Eingangsglieder 21 und 22 sind an ihren einander zugewandten Enden jeweils mit einem Abschnitt 14 kleineren Außendurchmessers versehen. Die Enden der stegartigen Fortsätze 24 und 25 weisen jedoch den großen Außendurchmesser der Eingangsglieder 21 und 22 auf. (Der stegartige Fortsatz 25 ist in Fig. 6 um 90° in die Zeichnungsebene verdreht dargestellt.)

In Fig. 6 sind die linken Stege 7 des linken Ausgangsgliedes 12 mit ihrem Ringbund 8 an dem linken Eingangsglied 21 befestigt. Die rechten Stege 7 des linken Ausgangsgliedes 12 sind mit ihrem Ringbund 8 an den stegartigen Fortsätzen 25 des rechten Eingangsgliedes 22 befestigt. Entsprechend sind die linken Stege 7 des rechten Ausgangsgliedes 13 durch ihren Ringbund 8 an den stegartigen Fortsätzen 24 des linken Eingangsgliedes 21 befestigt. Die rechten Stege 7 des rechten Ausgangsgliedes 13 sind über ihren Ringbund 8 an dem rechten Eingangsglied 22 befestigt.

Jedem Ausgangsglied 12 und 13 sind entsprechende Spulen 29 bzw. 30 oder ein Differentialtransformator zugeordnet.

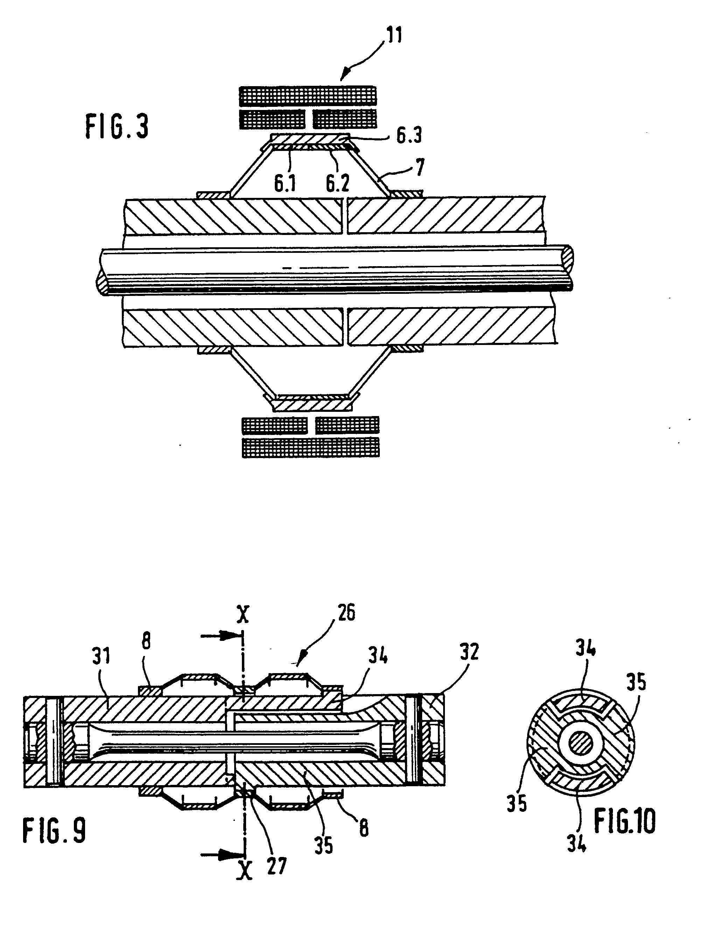

In dem weiteren Ausführungsbeispiel nach Fig. 9 und 10 sind die beiden koaxial hintereinander angeordneten Ausgangsglieder aus Fig. 6 zu einem einteiligen Ausgangsglied 26 zusammengefaßt. Dies wird dadurch erreicht, daß die beiden einander benachbarten Ringbunde 8 der beiden Ausgangsglieder in Einem gemeinsamen, mittleren Ringbund 27 vereinigt sind.

Die stegartigen Fortsätze 34 des linken Eingangsgliedes 31 sind verlängert gegenüber den Fortsätzen 24 aus Fig. 6. Die stegartigen Fortsätze 35 des rechten Eingangsgliedes 32 sind ebenfalls verlängert und sind im Innenbereich durch einen ringförmigen Fortsatz 28 miteinander verbunden. (Der stegartige Fortsatz 35 ist in Fig. 9 um 90° in die Zeichnungsebene verdreht dargestellt.)

Der linke Ringbund 8 ist an dem linken Eingangsglied befestigt, der rechte Ringbund 8 an dessen stegartigen Fortsätzen 34. Der mittlere Ringbund 27 ist an den stegartigen Fortsätzen 35 des rechten Eingangsgliedes befestigt.

Zur magnetischen Abschirmung der Spulen 29 und 30 bzw. der Differentialtransformatoren ist es zweckmäßig, dazwischen eine Scheibe 36 aus ferritischem Material anzuordnen.

Im folgenden wird die Funktion des Drehmomentsensors näher beschrieben : Die Abwicklung der Draufsicht auf das Ausgangsglied 6 mit ausgeklappten Stegen 7 zeigt in Fig. 4A die Neutralstellung des Drehmomentsensors. Diese Stellung wird durch den Drehstab 3 eingestellt. Die linken und die rechten Stege 7 haben dabei zur Umfangsrichtung die gleiche Winkellage. Wird das rechte Eingangsglied 2 gegenüber dem linken

3

Eingangsglied 1 verdreht, so wandert entsprechend der Fig. 4B der rechte Ringbund beispielsweise nach unten und der linke Ringbund 8 nach oben. Als Folge davon vergrößert sich der Winkel der rechten Stege 7, während sich der Winkel der linken Stege 7 verkleinert. Das Ausgangsglied 6 wird nach links verschoben. Diese Verschiebung ergibt in an sich bekannter Weise ein Meßsignal an den Induktivspulen 9 und 10. Bei einer Drehbewegung der beiden Eingangsglieder 1 und 2 in entgegengesetzter Richtung bewegt sich das Ausgangsglied 6 entsprechend Fig. 4C nach rechts.

Durch die erfindungsgemäße Ausbildung des Drehmomentsensors ergibt sich bereits bei einer kleinen Verdrehung der Eingangsglieder 1 und 2 gegeneinander eine relativ große Axialverschiebung des Ausgangsgliedes 6. Der Drehmomentsensor liefert deshalb sehr feinfühlige und genaue Meßergebnisse.

Verwendet man anstelle des einen Ausgangsgliedes 6 zwei Ausgangsglieder 12 und 13 entsprechend den Ausführungsbeispielen der Fig. 5 bis 10, so erhält man zwei voneinander völlig unabhängige Meßsysteme. Die beiden Ausgangsglieder 12 und 13 führen dabei den vollen Meßhub aus, ohne Vergrößerung des Verdrehweges des Drehstabes 3. Sind die mit dem einen Eingangsglied 21 bzw. 22 verbundenen Stege 7 der beiden Ausgangsglieder 21 und 22 bezüglich ihrer Winkelstellung gleichsinnig angeordnet (Fig. 8A und 8B), so bewegen sich die beiden Ausgangsglieder 12 und 13 in der gleichen Richtung. Sind dagegen die jeweils mit dem einen Eingangsglied 21 bzw. 22 verbundenen Stege 7 der beiden Ausgangsglieder 21 und 22 bezüglich ihrer Winkelstellung gegensinnig angeordnet, so ergibt sich eine gegensinnige Bewegung der beiden Ausgangsglieder 12 und 13, wie dies in Fig. 8C dargestellt ist.

Wie oben beschrieben ist es möglich, daß aus dem Ring 6.1 bzw. 6.2, den Stegen 7 und dem Ringbund 8 bestehende Teil aus Kunststoff herzustellen. Dafür kommt zweckmäßigerweise in Frage ein Kunststoff in der Art von Polyamid oder Polyacetal.

Die Ausgangsglieder 6, 12 und 13, die nach Fig. 2 aus den Ringen 6.1 und 6.2 bzw. nach Fig. 3 aus dem Ring 6.3 bestehen, können entweder aus magnetisierbarem Material, wie z.B. Eisen, oder aus elektrisch leitendem, nicht magnetisierbarem Material, wie z.B. Aluminium oder Kupfer, oder aber aus einer Kombination dieser Materialien bestehen. Bei magnetisierbarem Material bekommt die Spule eine höhere Induktivität, bei nichtmagnetisierbarem Material bekommt sie eine niedrigere Induktivität. Je nach Schaltung der Spulen ergeben sich aus der einen oder anderen Werkstoffwahl und Werkstoffkombination Vorteile. Bei Verwendung von magnetisierbarem Material wird der Ring geschlitzt.

<u>Bezugszeichen</u>

| | |
|---|---|
| 1 | Eingangsglied |
| 2 | Eingangsglied |
| 3 | Drehstab |
| 4 | stegartiger Fortsatz |
| 5 | stegartiger Fortsatz |
| 6 | Ausgangsglied |
| 6.1, 6.2 | Ring |
| 7 | Steg |
| 8 | Ringbund |
| 9 | Induktivspule |
| 10 | Induktivspule |
| 11 | Differentialtransformator |
| 12 | Ausgangsglied |
| 13 | Ausgangsglied |
| 14 | Abschnitt kleineren Außendurchmessers |
| 21 | Eingangsglied |
| 22 | Eingangsglied |
| 24 | stegartiger Fortsatz |
| 25 | stegartiger Fortsatz |
| 26 | Ausgangsglied |
| 27 | Ringbund |
| 28 | ringförmiger Fortsatz |
| 29 | Induktivspulen |
| 30 | Induktivspulen |
| 31 | Eingangsglied |
| 32 | Eingangsglied |
| 34 | stegartiger Fortsatz |
| 35 | stegartiger Fortsatz |
| 36 | Scheibe |

**Ansprüche**

1. Drehmomentsensor, insbesondere für elektrische Hilfskraft-Lenkungen,
– mit zwei koaxial zueinander angeordneten Eingangsgliedern (1, 2),
– mit einem die beiden Eingangsglieder (1, 2) miteinander verbindenden Drehstab (3),
– mit wenigstens einem im wesentlichen ringförmigen Ausgangsglied (6),
– wobei das Ausgangsglied (6) auf jeder seiner axial gerichteten Seiten durch je einen Satz von Verbindungselementen mit je einem der Eingangsglieder (1, 2) verbunden ist und
– mit dem Ausgangsglied (6) zugeordneten Spulen (9, 10), dadurch **gekennzeichnet,**

EP 0 363 357 B1

– daß das Ausgangsglied (6) durch die als biegeelastische Stege (7) ausgebildeten Verbindungselemente in einem radialen Abstand von den Eingangsgliedern (1, 2) gehalten ist,
– daß die Stege (7) jedes Satzes in einer zu der Längsachse des Drehmomentsensors wenigstens nahezu senkrechten und ebenen oder einer konisch ausgebildeten Fläche angeordnet sind,
– daß die Stege (7) aus Kunststoff bestehen und
– daß die beiden Eingangsglieder (1, 2) über eine Totgangkupplung miteinander verbunden sind.

2. Drehmomentsensor nach Anspruch 1, dadurch **gekennzeichnet**, daß die Eingangsglieder (1, 2) an ihren einander zugewandten Enden ineinander eingreifende, stegartige Fortsätze (4, 5) besitzen zur Bildung der Totgangmitnahme.

3. Drehmomentsensor nach Anspruch 2, dadurch **gekennzeichnet**, daß zwei Ausgangsglieder (12, 13) hintereinander angeordnet sind, wobei das erste Ausgangsglied (12) mit seinen Stegen (7) einerseits an dem einen Eingangsglied (21) und andererseits an den stegartigen Fortsätzen (25) des anderen Eingangsgliedes (22) angreift und wobei das zweite Ausgangsglied (13) mit seinen Stegen (7) einerseits an den stegartigen Fortsätzen (24) des einen Eingangsgliedes (21) und andererseits an dem anderen Eingangsglied (22) angreift. (Fig. 6 und 9)

4. Drehmomentensor nach Anspruch 3, dadurch **gekennzeichnet**, daß die jeweils mit dem einen Eingangsglied (21 bzw. 22) verbundenen Stege (7) der beiden Ausgangsglieder (12, 13) bezüglich ihrer Winkelstellung gleichsinnig angeordnet sind. (Fig. 8B)

5. Drehmomentsensor nach Anspruch 3, dadurch **gekennzeichnet**, daß die jeweils mit dem einen Eingangsglied (21 bzw. 22) verbundenen Stege (7) der beiden Ausgangsglieder (12, 13) bezüglich ihrer Winkelstellung gegensinnig angeordnet sind. (Fig. 8C)

6. Drehmomentsensor nach Anspruch 1, dadurch **gekennzeichnet**, daß das Ausgangsglied (6) aus zwei flachen, einander in radialer Richtung berührenden Ringen (6.1, 6.2) besteht, von denen jeder einen Satz der zu einem der Eingangsglieder (1, 2) gerichteten Stege (7) trägt.

7. Drehmomentsensor nach Anspruch 6, dadurch **gekennzeichnet**, daß die beiden Ringe (6.1, 6.2) durch Laserstrahl-Schweißung miteinander verbunden sind.

8. Drehmomentsensor nach Anspruch 6, dadurch **gekennzeichnet**, daß die Stege (7) an ihrem dem Eingangsglied (1, 2) zugewandten Ende durch einen Ringbund (8) miteinander verbunden sind.

9. Drehmomentsensor nach Anspruch 8, dadurch **gekennzeichnet**, daß die Ringbunde (8) mit den Eingangsgliedern (1, 2 ; 21, 22) bzw. mit deren stegartigen Fortsätzen (24, 25) durch Laserstrahl-Schweißung verbunden sind.

10. Drehmomentsensor nach Anspruch 3, dadurch **gekennzeichnet**, daß zwischen den Spulen (29, 30) der beiden Ausgangsglieder (12, 13) eine Scheibe (36) aus ferritischem Material angeordnet ist.

11. Verfahren zur Herstellung des durch Anspruch 8, gekennzeichneten Ausgangsgliedes (6), **gekennzeichnet** durch folgende Schritte :
– ein gezogener Topf mit einer zylindrischen Wand (Ring 6.1, 6.2) und einem im wesentlichen ebenen Boden wird in einem Teil seines Bodens durchgezogen, so daß ein zylindrischer Ansatz (Ringbund 8) entsteht,
– in den verbleibenden Rest des Bodens werden die Stege (7) gestanzt, so daß deren Verbindung mit der zylindrischen Wand (Ring 6.1, 6.2) und dem zylindrischen Ansatz (Ringbund 8) erhalten bleibt.

12. Drehmomentsensor nach Anspruch 8, dadurch **gekennzeichnet**, daß die Stege (7) und die Ringbunde (8) aus einem Kunststoff in der Art von Polyamid oder Polyacetal bestehen.

13. Drehmomentsensor nach Anspruch 1 oder 3, dadurch **gekennzeichnet**, daß die Ausgangsglieder (6, 12, 13) aus magnetisierbarem Material bestehen.

14. Drehmomentsensor nach Anspruch 1 oder 3, dadurch **gekennzeichnet**, daß die Ausgangsglieder (6, 12, 13) aus elektrisch leitendem, nicht magnetisierbarem Material bestehen.

15. Drehmomentsensor nach Anspruch 13, dadurch **gekennzeichnet**, daß die Ausgangsglieder (6, 12, 13) geschlitzte Ringe aufweisen.

16. Drehmomentsensor nach Anspruch 1 oder 3, dadurch **gekennzeichnet**, daß die Ausgangsglieder (6, 12, 13) aus einer Kombination von magnetisierbarem Material und elektrisch leitendem, nicht magnetisierbarem Material bestehen.

## Claims

1. Torque sensor, in particular for electric servo-assisted steering mechanisms,
– with two coaxially mounted input members (1, 2),
– with a torque rod (3) connecting the two input members (1, 2) together,

6

– with at least one substantially annular output member (6),

– the output member (6) being connected on each of its axially oriented sides to a respective input member (1, 2) by a respective set of connecting elements and

– with coils (9, 10) associated with the output member (6),

characterised

– in that the output member (6) is held at a radial distance from the input members (1, 2) by the connecting elements formed as flexibly elastic webs (7),

– in that the webs (7) of each set are arranged in a plane or conical face which is at least almost perpendicular to the longitudinal axis of the torque sensor,

– in that the webs (7) consist of plastics material, and

– in that the two input members (1, 2) are connected together via a lost motion clutch.

2. Torque sensor according to claim 1, characterised in that the input members (1, 2) have mutually engaging, web-like continuations (4, 5) on their mutually facing ends to form the lost motion dog.

3. Torque sensor according to claim 2, characterised in that two output members (12, 13) are mounted consecutively, the webs (7) of the first output member (12) engaging on one side with the one input member (21) and on the other side with the web-like continuations (25) of the other input member (22), and the webs (7) of the second output member (13) engaging on the one side with the web-like continuations (24) of one input member (21) and on the other side with the other input member (22). (Fig. 6 and 9).

4. Torque sensor according to claim 3, characterised in that the webs (7) of the two output members (12, 13) respectively connected to one of the input members (21 or 22 respectively) have the same direction in terms of their angular position. (Fig. 8B).

5. Torque sensor according to claim 3, characterised in that the webs (7) of the two output members (12, 13) respectively connected to one of the input members (21 or 22 respectively) have opposite directions in terms of their angular position. (Fig. 8C).

6. Torque sensor according to claim 1, characterised in that the output member (6) consists of two plane rings (6.1, 6.2), which contact one another in the radial direction and each of which carries a set of the webs (7) oriented towards one of the input members (1, 2).

7. Torque sensor according to claim 6, characterised in that the two rings (6.1, 6.2) are joined together by laser welding.

8. Torque sensor according to claim 6, characterised in that the webs (7) are joined together at their end facing the input member (1, 2) by a ring collar (8).

9. Torque sensor according to claim 8, characterised in that the ring collars (8) are joined to the input members (1, 2 ; 21, 22) or to their web-like continuations (24, 25) by laser welding.

10. Torque sensor according to claim 3, characterised in that a disc (36) of ferritic material is mounted between the coils (29, 30) of the two output members (12, 13).

11. Process for manufacturing the output member (6) characterised by claim 8, characterised by the following steps :

– a drawn pot with a cylindrical wall (ring, 6.1, 6.2) and with a substantially plane base is pulled through in part of its base, so that a cylindrical projection (ring collar 8) is formed,

– the webs (7) are pressed in the remainder of the base, so that their connexion to the cylindrical wall (ring 6.1, 6.2) and the cylindrical projection (ring collar 8) is retained.

12. Torque sensor according to claim 8, characterised in that the webs (7) and the ring collars (8) consist of a plastics material such as a polyamide or polyacetal.

13. Torque sensor according to claim 1 or 3, characterised in that the output members (6, 12, 13) consist of magnetisable material.

14. Torque sensor according to claim 1 or 3, characterised in that the output members (6, 12, 13) consist of an electrically conducting, non-magnetisable material.

15. Torque sensor according to claim 13, characterised in that the output members (6, 12, 13) have slotted rings.

16. Torque sensor according to claim 1 or 3, characterised in that the output members (6, 12, 13) consist of a combination of magnetisable material and electrically conducting, non-magnetisable material.

**Revendications**

1. Capteur de couple, notamment pour servodirections électriques, comportant :

– deux éléments d'entrée (1, 2) disposés coaxialement l'un par rapport à l'autre,

– une barre de torsion (3) reliant l'un à l'autre les deux éléments d'entrée (1, 2),

– au moins un élément de sortie (6) à forme sensiblement annulaire,

– à chaque extrémité axiale de l'élément de sortie (6), un jeu d'éléments de liaison reliant celui-ci à l'élément d'entrée (1, 2) correspondant à cette extrémité, et

– des bobines (9, 10) associées à l'élément de sortie (6),

**caractérisé en ce que :**

– l'élément de sortie (6) est maintenu à une distance radiale des éléments d'entrée (1, 2) au moyen des éléments de liaison formés par des entretoises élastiques en flexion (7),

– les entretoises (7) de chaque jeu sont disposées dans une surface conique ou plane et au moins approximativement perpendiculaire à l'axe horizontal du capteur de couple,

– les entretoises (7) sont en matière synthétique, et

– les deux éléments d'entrée (1, 2) sont reliés par un accouplement à jeu mort.

2. Capteur selon la revendication 1, **caractérisé** en ce que les éléments d'entrée (1, 2) comportent, à leurs extrémités se faisant face, des protubérances en forme de nervures (4, 5) qui s'engagent les unes entre les autres pour former l'accouplement à jeu mort.

3. Capteur selon la revendication 2, **caractérisé** en ce que deux éléments de sortie (12, 13) sont disposés l'un derrière l'autre, le premier élément de sortie (12) étant lié par ses entretoises (7) d'une part au premier élément d'entrée (21) et d'autre part auxdites protubérances (25) de l'autre élément d'entrée (22), et le second élément de sortie (13) étant lié par ses entretoises (7) d'une part auxdites protubérances (24) du premier élément d'entrée (21) et d'autre part à l'autre élément d'entrée (22) (Fig. 6 et 9).

4. Capteur selon la revendication 3, **caractérisé** en ce que celles des entretoises (7) des deux éléments de sortie (12, 13) qui sont liées au premier élément d'entrée (21 ou 22) sont disposées dans le même sens au point de vue de leur position angulaire (Fig. 8B).

5. Capteur selon la revendication 3, **caractérisé** en ce que celles des entretoises (7) des deux éléments de sortie (12, 13) qui sont liées au premier élément d'entrée (21 ou 22) sont disposées dans des sens contraires au point de vue de leur position angulaire (Fig. 8C).

6. Capteur selon la revendication 1, **caractérisé** en ce que l'élément de sortie (6) est formé de deux anneaux plats (6.1, 6.2) qui se touchent en direction radiale et dont chacun porte un jeu d'entretoises (7) dirigées vers l'un des éléments d'entrée (1, 2).

7. Capteur selon la revendication 6, **caractérisé** en ce que les deux anneaux (6.1, 6.2) sont fixés l'un à l'autre par soudage à rayon laser.

8. Capteur selon la revendication 6, **caractérisé** en ce que les entretoises (7) sont liées entre elles par un rebord annulaire (8) à leur extrémité du côté de l'élément d'entrée (1, 2).

9. Capteur selon la revendication 8, **caractérisé** en ce que les rebords annulaires (8) sont fixés aux éléments (1, 2 ; 21, 22) ou aux protubérances en forme de nervures (24, 25) de ceux-ci par soudage à rayon laser.

10. Capteur selon la revendication 3, **caractérisé** en ce qu'un disque (36) en matière ferritique est disposé entre les bobines (29, 30) des deux éléments de sortie (12, 13).

11. Procédé pour fabriquer l'élément de sortie (6) caractérisé par la revendication 8, **caractérisé** par les étapes suivantes :

– un pot étiré, ayant une paroi cylindrique (anneau 6.1, 6.2) et un fond sensiblement plat, est embouti sur une partie de son fond de façon à présenter un appendice cylindrique (rebord annulaire 8),

– les entretoises (7) sont estampées dans la partie restante du fond, de façon à conserver leur liaison avec la paroi cylindrique (anneau 6.1, 6.2) et avec l'appendice cylindrique (rebord annulaire 8).

12. Capteur selon la revendication 8, **caractérisé** en ce que les entretoises (7) et les rebords annulaires (8) sont en une matière synthétique du genre polyamide ou polyacétal.

13. Capteur selon la revendication 1 ou 3, **caractérisé** ce que les éléments de sortie (6, 12, 13) sont en matière magnétisable

14. Capteur selon la revendication 1 ou 3, **caractérisé** ce que les éléments de sortie (6, 12, 13) sont en matière électriquement conductrice et non magnétisable.

15. Capteur selon la revendication 13, **caractérisé** en ce que les éléments de sortie (6, 12, 13) comportent des anneaux fendus.

16. Capteur selon la revendication 1 ou 3, **caractérisé** en ce que les éléments de sortie (6, 12, 13) sont faits d'une combinaison de matière magnétisable et de matière électriquement conductrice et non magnétisable.

FIG.1

FIG.2 v

FIG.4A

FIG.4B

FIG.4C

FIG.5

FIG.6

FIG.7

FIG.8A

FIG.8B

FIG.8C

FIG.3

11

6.3

6.1    6.2    7

FIG.9

31    8    X    26    34    32

34

35

8

35

27

X

34

35

35

34

FIG.10